(19) **Europäisches Patentamt**
**European Patent Office**
**Office européen des brevets**

(11) **EP 4 375 705 A1**

(12) **EUROPEAN PATENT APPLICATION**
published in accordance with Art. 153(4) EPC

(43) Date of publication:
**29.05.2024 Bulletin 2024/22**

(51) International Patent Classification (IPC):
**G01S 13/34** (2006.01)    **G01S 13/58** (2006.01)
**G01S 13/60** (2006.01)

(21) Application number: **22845805.5**

(52) Cooperative Patent Classification (CPC):
**G01S 13/34; G01S 13/58; G01S 13/60**

(22) Date of filing: **08.07.2022**

(86) International application number:
**PCT/JP2022/027172**

(87) International publication number:
**WO 2023/002871 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2021 JP 2021119969**

(71) Applicant: **Kyocera Corporation**
**Kyoto-shi Kyoto 612-8501 (JP)**

(72) Inventors:
• **MURAKAMI Youhei**
**Kyoto-shi, Kyoto 612-8501 (JP)**
• **NISHIKIDO Masamitsu**
**Kyoto-shi, Kyoto 612-8501 (JP)**
• **SATO Masayuki**
**Kyoto-shi, Kyoto 612-8501 (JP)**
• **KAWAJI Satoshi**
**Kyoto-shi, Kyoto 612-8501 (JP)**

(74) Representative: **Viering, Jentschura & Partner
mbB**
**Patent- und Rechtsanwälte**
**Am Brauhaus 8**
**01099 Dresden (DE)**

(54) **ELECTRONIC DEVICE, METHOD FOR CONTROLLING ELECTRONIC DEVICE, AND PROGRAM**

(57) An electronic device includes a transmission antenna, a reception antenna, and a signal processor. The transmission antenna transmits a transmission wave. The reception antenna receives a reflected wave that is the transmission wave having been reflected. The signal processor calculates a distance and a relative velocity between the electronic device and an object that reflects the transmission wave, based on a transmission signal transmitted as the transmission wave and a reception signal received as the reflected wave. The signal processor combines the distance and the relative velocity in accordance with a number of combinations set as a number of times the reception signal is combined.

**EP 4 375 705 A1**

FIG. 2

**Description**

CROSS-REFERENCE TO RELATED APPLICATIONS

This application claims priority from Japanese Patent Application No. 2021-119969 filed in Japan on July 20, 2021, the entire disclosure of which is incorporated herein by reference.

TECHNICAL FIELD

The present disclosure relates to an electronic device, a method for controlling an electronic device, and a program.

BACKGROUND OF INVENTION

For example, in fields such as automobile-related industries, a technology for measuring a distance or the like between a vehicle of interest and a predetermined object is regarded as important. Recently, various studies have been conducted particularly on a radar (Radio Detecting and Ranging) technology for measuring a distance or the like to an object such as an obstacle by transmitting a radio wave such as a millimeter wave and then receiving a reflected wave reflected off the object. Such a technology for measuring a distance or the like is expected to be more important in the future with progresses of a technology for assisting drivers in driving and an automated-driving-related technology for partially or entirely automating driving.

Some suggestions have been made on a technology that may improve the accuracy of detecting the presence of a predetermined object by receiving a reflected wave of a radio wave that has been transmitted and reflected off the object. For example, Patent Literature 1 has proposed that a component of a received light signal corresponding to a reflected wave from a reflecting object is amplified by integrating a predetermined number of received light signals output based on a predetermined number of laser beams to improve a detection sensitivity of the reflected wave from the reflecting object. Patent Literature 2 discloses a radar apparatus that may accurately measure a distance to a reflecting object by quickly reacting to a change in a relative velocity of the reflecting object even when the relative velocity increases.

CITATION LIST

PATENT LITERATURE

**[0005]**

　　Patent Literature 1: Japanese Unexamined Patent Application Publication No. 2004-177350
　　Patent Literature 2: Japanese Unexamined Patent Application Publication No. 2007-248146

SUMMARY

In one embodiment, an electronic device includes a transmission antenna, a reception antenna, and a signal processor.

The transmission antenna transmits a transmission wave.

The reception antenna receives a reflected wave that is the transmission wave having been reflected.

The signal processor calculates a distance and a relative velocity between the electronic device and an object that reflects the transmission wave, based on a transmission signal transmitted as the transmission wave and a reception signal received as the reflected wave.

The signal processor combines the distance and the relative velocity in accordance with a number of combinations set as a number of times the reception signal is combined.

In one embodiment, a method for controlling an electronic device includes

　　transmitting a transmission wave;
　　receiving a reflected wave that is the transmission wave having been reflected;
　　calculating a distance and a relative velocity between the electronic device and an object that reflects the transmission wave, based on a transmission signal transmitted as the transmission wave and a reception signal received as the reflected wave; and
　　combining the distance and the relative velocity in accordance with a number of combinations set as a number of times the reception signal is combined.

In one embodiment, a program causes

an electronic device to execute

transmitting a transmission wave;
receiving a reflected wave that is the transmission wave having been reflected;
calculating a distance and a relative velocity between the electronic device and an object that reflects the transmission wave, based on a transmission signal transmitted as the transmission wave and a reception signal received as the reflected wave; and
combining the distance and the relative velocity in accordance with a number of combinations set as a number of times the reception signal is combined.

BRIEF DESCRIPTION OF THE DRAWINGS

FIG. 1 is a diagram for describing how an electronic device according to one embodiment is used.
FIG. 2 is a functional block diagram schematically illustrating a configuration of the electronic device according to the one embodiment.
FIG. 3 is a block diagram schematically illustrating functions of a controller of the electronic device according to the one embodiment.
FIG. 4 is a block diagram schematically illustrating functions of a signal processor of the electronic device according to the one embodiment.
FIG. 5 is a diagram for describing a structure of a transmission signal according to the one embodiment.
FIG. 6 is a diagram illustrating an example of a result of velocity fast Fourier transform performed by the electronic device according to the one embodiment.
FIG. 7 is a diagram illustrating an example of yet-to-be-combined detection results in a second operation mode of the electronic device according to the one embodiment.
FIG. 8 is a diagram illustrating an example of a combined detection result in the second operation mode of the electronic device according to the one embodiment.

DESCRIPTION OF EMBODIMENTS

The detection accuracy is desirably improved in a technology for detecting a predetermined object by receiving a reflected wave that is a transmission wave reflected off the object. The present disclosure provides an electronic device, a method for controlling an electronic device, and a program that contribute to improvement of the object detection accuracy. According to one embodiment, an electronic device, a method for controlling an electronic device, and a program that contribute to improvement of the object detection accuracy can be provided. One embodiment is described in detail below with reference to the drawings.

In the present disclosure, the term "electronic device" may refer to a device driven by electric power supplied from a power system or a battery, for example. In the present disclosure, the term "user" may refer to an entity (typically, a person) that uses or can use an electronic device according to one embodiment and an entity that uses or can use a system including the electronic device according to the one embodiment.

An electronic device according to one embodiment is mounted in a vehicle (mobility device) such as an automobile, for example, and is capable of detecting, as a target, a predetermined object located around the mobility device. To this end, the electronic device according to the one embodiment is capable of transmitting a transmission wave to an area around the mobility device from a transmission antenna installed on or in the mobility device. The electronic device according to the one embodiment is also capable of receiving, from a reception antenna installed on or in the mobility device, a reflected wave that is the reflected transmission wave. For example, a radar sensor or the like installed on or in the mobility device may include at least one of the transmission antenna or the reception antenna.

A typical configuration example is described below in which the electronic device according to the one embodiment is mounted in an automobile such as a passenger car. However, the mobility device in which the electronic device according to the one embodiment is mounted is not limited to an automobile. The electronic device according to the one embodiment may be mounted in various mobility devices such as an autonomous car, a bus, a truck, a taxi, a motorcycle, a bicycle, a ship, an aircraft, a helicopter, agricultural machinery such as a tractor, a snowplow, a garbage truck, a police car, an ambulance, and a drone. The mobility device in which the electronic device according to the one embodiment is mounted is not necessarily limited to a mobility device that moves by its own motive power. For example, the mobility device in which the electronic device according to the one embodiment is mounted may be a trailer towed by a tractor. The electronic device according to the one embodiment is capable of measuring a distance or the like between a sensor and a predetermined object when at least one of the sensor or the object is movable. The electronic device according to the one embodiment is also capable of measuring a distance or the like between the sensor and the object even when both the sensor and the object are stationary. The automobile encompassed by the present disclosure is not limited by the overall length, the overall width, the overall height, the displacement, the seating capacity, the load, or the like. For example, the automobiles of the present disclosure include an automobile having a displacement greater than 660 cc and an automobile having a displacement equal to or less than 660 cc that is a so-called light automobile. The automobiles encompassed by the present disclosure also include an automobile that partially or entirely uses electricity as energy and uses a motor.

An example of how the electronic device according to the one embodiment detects an object is described.

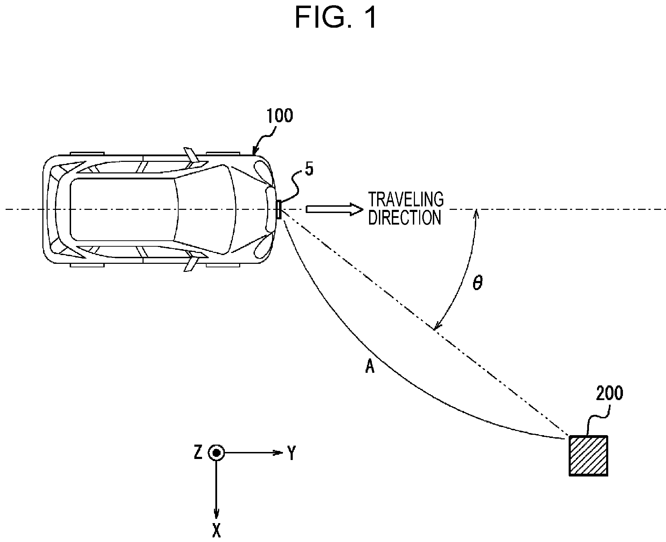

FIG. 1 is a diagram for describing how the electronic device according to the one embodiment is used. FIG. 1 illustrates an example in which a sensor, including a transmission antenna and a reception antenna, according to the one embodiment is installed on a mobility device.

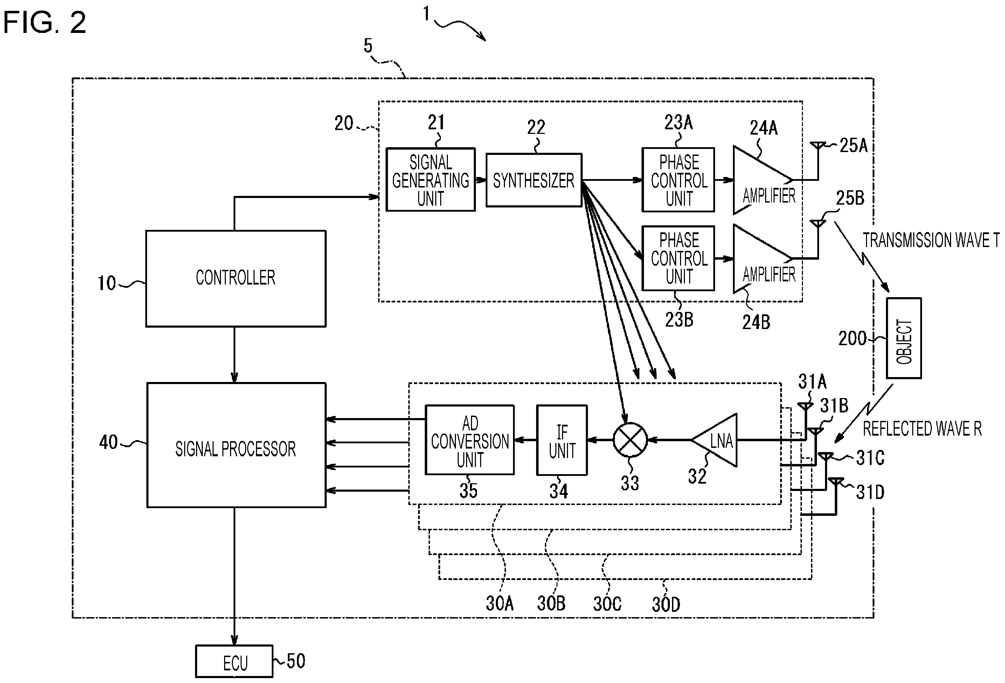

A sensor 5, including a transmission antenna and a reception antenna, according to the one embodiment is installed on a mobility device 100 illustrated in FIG. 1. The mobility device 100 illustrated in FIG. 1 includes an electronic device 1 according to the one embodiment mounted (for example, built) therein. A specific configuration of the electronic device 1 is described later. The sensor 5 may include at least one of the transmission antenna or the reception antenna, for example. The sensor 5 may appropriately include at least any of other functional units, such as at least part of a controller 10 (see FIG. 2) included in the electronic device 1. The mobility device 100 illustrated in FIG. 1 may be an automotive vehicle such as a passenger car but may be a mobility device of any type. In FIG. 1, the mobility device 100 may move (travel or slowly travel), for example, in a positive Y-axis direction (traveling direction) illustrated in FIG. 1 or in another direction, or may be stationary without moving.

As illustrated in FIG. 1, the sensor 5 including the transmission antenna is installed on the mobility device 100. In the example illustrated in FIG. 1, only one sensor 5 including the transmission antenna and the reception antenna is installed at a front portion of the mobility device 100. The position where the sensor 5 is installed on the mobility device 100 is not limited to the position illustrated in FIG. 1 and may be another appropriate position. For example, the sensor 5 illustrated in FIG. 1 may be installed on a left side, on a right side, and/or at a rear portion of the mobility device 100. The number of such sensors 5 may be any number equal to or greater than 1 depending on various conditions (or requirements) such as a range and/or an accuracy of measurement performed at the mobility device 100. The sensor 5 may be installed inside the mobility device 100. The inside the mobility device 100 may be, for example, a space inside a bumper, a space inside a body, a space inside a headlight, or a space such as a driver's space.

The sensor 5 transmits an electromagnetic wave as a transmission wave from the transmission antenna. For example, when a predetermined object (for example, an object 200 illustrated in FIG. 1) is located around the mobility device 100, at least part of the transmission wave transmitted from the sensor 5 is reflected off the object to become a reflected wave. For example, the reception antenna of the sensor 5 receives such a reflected wave. In this manner, the electronic device 1 mounted in the mobility device 100 can detect the object as a target (target object).

The sensor 5 including the transmission antenna may be typically a radar (Radio Detecting and Ranging) sensor that transmits and receives a radio wave. However, the sensor 5 is not limited to a radar sensor. The sensor 5 according to the one embodiment may be, for example, a sensor based on the LIDAR (Light Detection and Ranging, Laser Imaging Detection and Ranging) technology that uses an optical wave. Each of these sensors can include, for example, a patch antenna. Since the technologies such as RADAR and LIDAR are already known, detailed description may be appropriately simplified or omitted.

The electronic device 1 mounted in the mobility device 100 illustrated in FIG. 1 receives, from the reception antenna, the reflected wave of the transmission wave transmitted from the transmission antenna of the sensor 5. In this manner, the electronic device 1 can detect, as the target, the predetermined object 200 located within a predetermined distance from the mobility device 100. For example, as illustrated in FIG. 1, the electronic device 1 can measure (estimate) a distance A between the mobility device 100, which is a vehicle of interest, and the predetermined object 200. The electronic device 1 can also measure (estimate) a relative velocity between the mobility device 100, which is the vehicle of interest, and the predetermined object 200. The electronic device 1 can further measure (estimate) a direction (an angle of arrival $\theta$) from which the reflected wave from the predetermined object 200 arrives at the mobility device 100, which is the vehicle of interest.

The object 200 may be, for example, at least any of an oncoming automobile traveling in a lane adjacent to a lane of the mobility device 100, an automobile traveling next to the mobility device 100, an automobile traveling in front of or behind the mobility device 100 in the same lane, and the like. The object 200 may also be any object located around the mobility device 100, such as a motorcycle, a bicycle, a stroller, a person such as a pedestrian, an animal, other forms of life such as an insect, a guardrail, a median strip, a road sign, a step on a sidewalk, a wall, a maintenance hole, or an obstacle. The object 200 may be in motion or stationary. For example, the object 200 may be an automobile or the like that is parked or stationary around the mobility device 100. In the present disclosure, the object detected by the sensor 5 includes a living thing such as a person or an animal in addition to a non-living thing. The object detected by the sensor 5 in the present disclosure includes a target, which includes a person, an object, and an animal, to be detected with the radar technology.

In FIG. 1, a ratio between a size of the sensor 5 and a size of the mobility device 100 does not necessarily indicate an actual ratio. FIG. 1 illustrates the sensor 5 that is installed at an outer portion of the mobility device 100. However, in one embodiment, the sensor 5 may be installed at various positions of the mobility device 100. For example, in one embodiment, the sensor 5 may be installed inside the bumper of the mobility device 100 so as not to appear on the external appearance of the mobility device 100.

Description is given below on the assumption that the transmission antenna of the sensor 5 transmits a radio wave in a frequency band, such as a millimeter wave (equal to or higher than 30 GHz) or a quasi-millimeter wave (for example, around 20 GHz to 30 GHz) as a typical example. For example, the transmission antenna of the sensor 5 may transmit a radio wave having a frequency bandwidth of 4 GHz such as from 77 GHz to 81 GHz.

FIG. 2 is a functional block diagram schematically illustrating a configuration example of the electronic device 1 according to the one embodiment. An example of the configuration of the electronic device 1 according to the one embodiment is described below.

When a distance or the like is measured by using a millimeter-wave radar, a frequency-modulated continuous wave radar (hereinafter, referred to as an FMCW radar) is often used. The FMCW radar sweeps a frequency of a to-be-transmitted radio wave to generate a transmission signal. Thus, a frequency of the radio wave used by such a millimeter-wave FMCW radar, which uses a radio wave of a frequency band of 79 GHz, for example, has a frequency bandwidth of 4 GHz such as from 77 GHz to 81 GHz, for example. The radar of the frequency band of 79 GHz has a feature that a usable frequency bandwidth is wider than other millimeter-wave and/or quasi-millimeter-wave radars of frequency bands of 24 GHz and 76 GHz, for example. Such an embodiment is described below as an example.

As illustrated in FIG. 2, the electronic device 1 according to the one embodiment includes the sensor 5 and an ECU (Electronic Control Unit) 50. The ECU 50 controls various operations of the mobility device 100. The ECU 50 may include at least one or more ECUs. The electronic device 1 according to the one embodiment may include the controller 10. The electronic device 1 according to the one embodiment may also appropriately include another functional unit such as at least any of the transmission unit 20 or reception units 30A to 30D. The electronic device 1 according to the one embodiment may further include a signal processor 40. As illustrated in FIG. 2, the electronic device 1 may include multiple reception units such as the reception units 30A to 30D. When the reception units 30A, 30B, 30C, and 30D are not distinguished from one another, the reception units 30A, 30B, 30C, and 30D are simply referred to as "reception units 30" below.

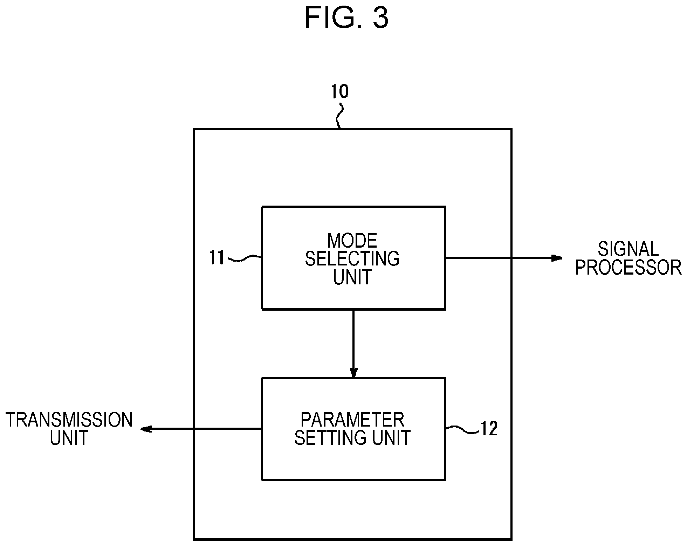

FIG. 3 is a block diagram schematically illustrating functions of the controller 10 illustrated in FIG. 2. As illustrated in FIG. 3, the controller 10 may include a mode selecting unit 11 and a parameter setting unit 12. These functional units included in the controller 10 are further described later.

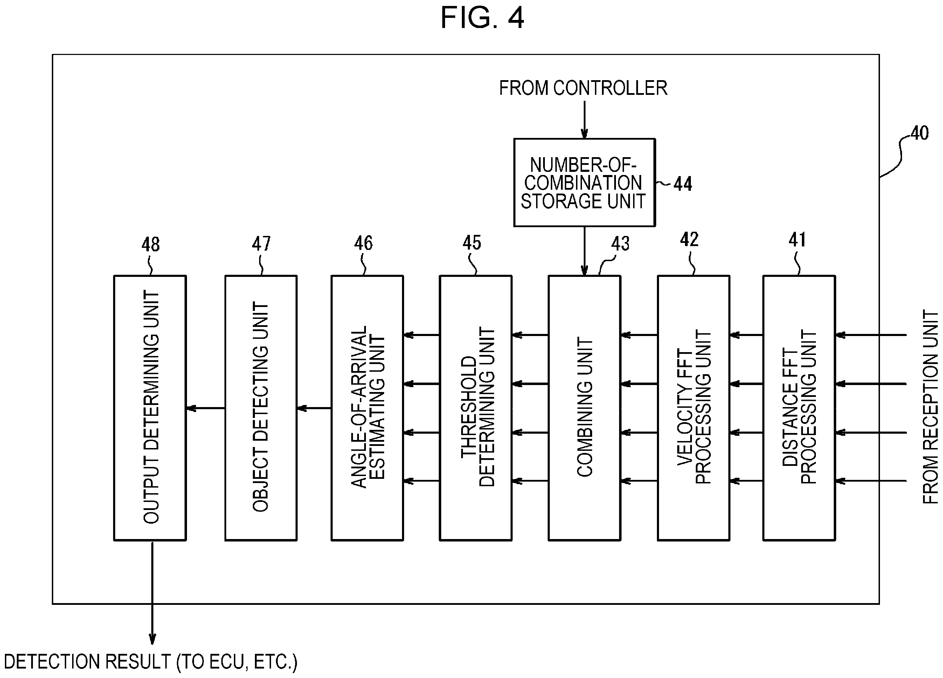

FIG. 4 is a block diagram schematically illustrating functions of the signal processor 40 illustrated in FIG. 2. As illustrated in FIG. 4, the signal processor 40 may include a distance FFT processing unit 41, a velocity FFT processing unit 42, a combining unit 43, a number-of-combinations storage unit 44, a threshold determining unit 45, an angle-of-arrival estimating unit 46, an object detecting unit 47, and an output determining unit 48. These functional units included in the signal processor 40 are further described later.

As illustrated in FIG. 2, the transmission unit 20 may include a signal generating unit 21, a synthesizer 22, phase control units 23A and 23B, amplifiers 24A and 24B, and transmission antennas 25A and 25B. When the phase control units 23A and 23B are not distinguished from each other, the phase control units 23A and 23B are simply referred to as "phase control units 23" below. When the amplifiers 24A and 24B are not distinguished from each other, the amplifiers 24A and 24B are simply referred to as "amplifiers 24" below. When the transmission antennas 25A and 25B are not distinguished from each other, the transmission antennas 25A and 25B are simply referred to as "transmission antennas 25" below.

As illustrated in FIG. 2, each of the reception units 30 may include a respective one of reception antennas 31A to 31D. When the reception antennas 31A, 31B, 31C, and 31D are not distinguished from one another, the reception antennas 31A, 31B, 31C, and 31D are simply referred to as "reception antennas 31" below. As illustrated in FIG. 2, each of the multiple reception units 30 may include an LNA 32, a mixer 33, an IF unit 34, and an AD conversion unit 35. The reception units 30A to 30D may have the same and/or similar configuration. FIG. 2 schematically illustrates the configuration of only the reception unit 30A as a representative example.

The sensor 5 described above may include, for example, the transmission antennas 25 and the reception antennas 31. The sensor 5 may also appropriately include at least any of other functional units such as the controller 10 and the signal processor 40.

The controller 10 included in the electronic device 1 according to the one embodiment is capable of controlling the individual functional units of the electronic device 1 and controlling operations of the entire electronic device 1. To provide control and/or processing capabilities for executing various functions, the controller 10 may include at least one processor, for example, a CPU (Central Processing Unit) or a DSP (Digital Signal Processor). The controller 10 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In the one embodiment, the controller 10 may be configured as, for example, a CPU (hardware) and a program (software) executed by the CPU. The controller 10 may appropriately include a memory necessary for operations of the controller 10.

In the electronic device 1 according to the one embodiment, the controller 10 may control at least one of the transmission unit 20 or the reception units 30. In this case, the controller 10 may control at least one of the transmission unit 20 or the reception units 30, based on various kinds of information stored in any storage unit (memory). In the electronic device 1 according to the one embodiment, the controller 10 may instruct the signal generating unit 21 to generate a signal or may control the signal generating unit 21 to generate a signal.

In the controller 10 illustrated in FIG. 3, the mode selecting unit 11 selects an operation mode of the electronic device 1. In one embodiment, the operation mode of the electronic device 1 selected by the mode selecting unit 11 may be a radar mode. The radar mode selected by the mode selecting unit 11 is further described later. The operation mode of the electronic device 1 selected by the mode selecting unit 11 may be sent to the parameter setting unit 12 and the signal processor 40. In one embodiment, the operation mode of the electronic device 1 selected by the mode selecting unit 11 may be sent to the number-of-combinations storage unit 44 (see FIG. 3) of the signal processor 40. As is described below, the mode selecting unit 11 may store, in the number-of-combinations storage unit 44, information regarding the number of combinations (for example, a table indicating the number of combinations) corresponding to the selected operation mode of the electronic device 1.

In the controller 10 illustrated in FIG. 3, the parameter setting unit 12 sets various parameters corresponding to the operation mode of the electronic device 1 selected by the mode selecting unit 11. In one embodiment, the parameter setting unit 12 may set various radar parameters corresponding to the radar mode, as the parameters corresponding to the operation of the electronic device 1. The parameters set by the parameter setting unit 12 may be stored in advance in any storage unit, or may be acquired by communication, for example. The parameters set by the parameter setting unit 12 are further described later. The parameters set by the parameter setting unit 12 may be sent to the transmission unit 20. In one embodiment, the parameters set by the parameter setting unit 12 may be sent to the signal generating unit 21 (see FIG. 3) of the transmission unit 20. The signal generating unit 21 of the transmission unit 20 generates a transmission signal (transmission wave) to be transmitted from the electronic device 1, based on the parameters sent from the parameter setting unit 12.

In accordance with control performed by the controller 10, the signal generating unit 21 generates a signal (transmission signal) to be transmitted as a transmission wave T from each of the transmission antennas 25. As described above, the signal generating unit 21 may generate a transmission signal, based on the various parameters sent from the parameter setting unit 12. Specifically, when generating a transmission signal, the signal generating unit 21 may allocate a frequency of the transmission signal in accordance with the parameters set by the parameter setting unit 12, for example. For example, the signal generating unit 21 may allocate a frequency of the transmission signal in accordance with the parameters set by the parameter setting unit 12. For example, the signal generating unit 21 receives frequency information from the controller 10 or the any storage unit (memory) and generates a signal having a predetermined frequency in a frequency band such as from 77 GHz to 81 GHz, for example. The signal generating unit 21 may include a functional unit such as a voltage control oscillator (VCO), for example.

The signal generating unit 21 may be configured as hardware having the function, for example as a microcomputer, or for example as a processor such as a CPU and a program or the like executed by the processor. Each functional unit described below may also be configured as hardware having the function, for example as a microcomputer if possible, or for example as a processor such as a CPU and a program or the like executed by the processor if possible.

In the electronic device 1 according to the one embodiment, the signal generating unit 21 may generate a transmission signal (transmission chirp signal) such as a chirp signal, for example. In particular, the signal generating unit 21 may generate a signal (linear chirp signal) whose frequency changes linearly and periodically. For example, the signal generating unit 21 may generate a chirp signal whose frequency linearly and periodically increases from 77 GHz to 81 GHz as time elapses. For example, the signal generating unit 21 may generate a signal whose frequency periodically repeats a linear increase (up-chirp) from 77 GHz to 81 GHz and a decrease (down-chirp) as time elapses. For example, the controller 10 (the parameter setting unit 12) may set in advance the signal generated by the signal generating unit 21. For example, the any storage unit (memory) or the like may store in advance the signal generated by the signal generating unit 21. Since a chirp signal used in a technical field such as the radar is known, more detailed description is appropriately simplified or omitted. The signal generated by the signal generating unit 21 is supplied to the synthesizer 22.

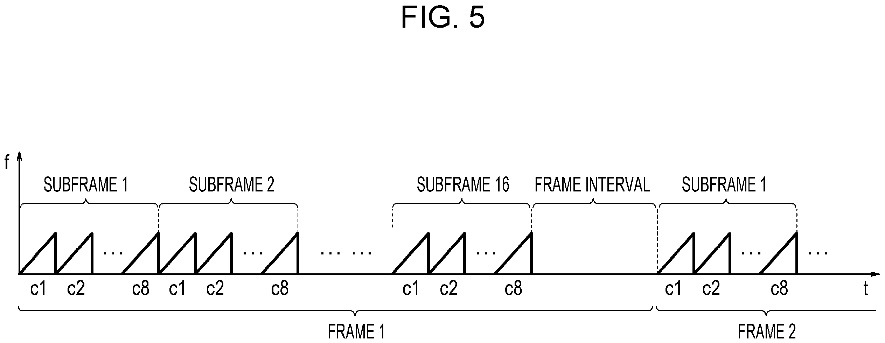

FIG. 5 is a diagram for describing an example of chirp signals generated by the signal generating unit 21.

In FIG. 5, the horizontal axis represents elapsed time and the vertical axis represents a frequency. In the example illustrated in FIG. 5, the signal generating unit 21 generates linear chirp signals whose frequency changes linearly and periodically. FIG. 5 illustrates chirp signals c1, c2, ..., c8. As illustrated in FIG. 5, the frequency of each chirp signal linearly increases as time elapses.

In the example illustrated in FIG. 5, one subframe includes eight chirp signals c1, c2, ..., c8. That is, each of subframes such as a subframe 1 and a subframe 2 illustrated in FIG. 5 includes eight chirp signals c1, c2, ..., c8. In the example illustrated in FIG. 5, one frame includes 16 subframes such as the subframes 1 to 16. That is, each of frames such as a frame 1 and a frame 2 illustrated in FIG. 5 includes 16 subframes. As illustrated in FIG. 5, a frame interval of a predetermined length may be included between frames. One frame illustrated in FIG. 5 may have a length of about 30 ms to 50 ms, for example.

In FIG. 5, the frame 2 and subsequent frames may have the same and/or similar configuration. In FIG. 5, the frame 3 and subsequent frames may have the same and/or similar configuration. In the electronic device 1 according to the one embodiment, the signal generating unit 21 may generate a transmission signal as any number of frames. In FIG. 5, an illustration of some chirp signals is omitted. As described above, for example, a relationship between time and a frequency of the transmission signal generated by the signal generating unit 21 may be set by the parameter setting unit 12 or may be stored in any storage unit (memory) or the like.

As described above, the electronic device 1 according to the one embodiment may transmit a transmission signal made up of subframes each including multiple chirp signals. The electronic device 1 according to the one embodiment may transmit a transmission signal made up of frames each including a predetermined number of subframes.

In the description below, the electronic device 1 transmits a transmission signal having a frame structure illustrated in FIG. 5. However, the frame structure illustrated in FIG. 5 is an example. For example, the number of chirp signals included in one subframe is not limited to eight. In one embodiment, the signal generating unit 21 may generate a subframe including any number of (for example, multiple) chirp signals. The subframe structure illustrated in FIG. 5 is also an example. For example, the number of subframes included in one frame is not limited to 16. In one embodiment, the signal generating unit 21 may generate a frame including any number of (for example, multiple) subframes. The signal generating unit 21 may generate signals having different frequencies. The signal generating unit 21 may generate multiple discrete signals of bandwidths in which frequencies f are different from each other.

Referring back to FIG. 2, the synthesizer 22 increases the frequency of the signal generated by the signal generating unit 21 to a frequency in a predetermined frequency band. The synthesizer 22 may increase the frequency of the signal generated by the signal generating unit 21 to a frequency selected as a frequency of the transmission wave T to be transmitted from each of the transmission antennas 25. For example, the controller 10 (the parameter setting unit 12) may set the frequency selected as the frequency of the transmission wave T to be transmitted from each of the transmission antennas 25. For example, the any storage unit (memory) may store the frequency selected as the frequency of the transmission wave T to be transmitted from each of the transmission antennas 25. The signal whose frequency has been increased by the synthesizer 22 is supplied to the phase control unit 23 and the mixer 33. When the multiple phase control units 23 are present, the signal whose frequency has been increased by the synthesizer 22 may be supplied to each of the multiple phase control units 23. When the multiple reception units 30 are present, the signal whose frequency has been increased by the synthesizer 22 may be supplied to the mixer 33 of each of the multiple reception units 30.

Each of the phase control units 23 controls a phase of the transmission signal supplied from the synthesizer 22. Specifically, for example, in accordance with control performed by the controller 10, each of the phase control units 23 may appropriately advance or delay the phase of the signal supplied from the synthesizer 22 to adjust the phase of the transmission signal. In this case, based on a difference between paths of the respective transmission waves T to be transmitted from the multiple transmission antennas 25, the phase control units 23 may adjust the phases of the respective transmission signals. The phase control units 23 appropriately adjust the phases of the respective transmission signals, so that the transmission waves T transmitted from the multiple transmission antennas 25 enhance with each other in a predetermined direction to form a beam (beamforming). In this case, for example, the any storage unit (memory) may store a correlation between a direction of beamforming and amounts of phase by which the respective transmission signals transmitted by the multiple transmission antennas 25 are to be controlled. The transmission signal whose phase is controlled by each of the phase control units 23 is supplied to a respective one of the amplifiers 24.

The amplifier 24 amplifies power (electric power) of the transmission signal supplied from the phase control unit 23 in accordance with control performed by the controller 10, for example. When the sensor 5 includes the multiple transmission antennas 25, each of the multiple amplifiers 24 may amplify power (electric power) of the transmission signal supplied from a respective one of the multiple phase control units 23 in accordance with control performed by the controller 10, for example. Since the technique for amplifying power of a transmission signal is already known, more detailed description is omitted. The amplifier 24 is connected to the transmission antenna 25.

The transmission antenna 25 outputs (transmits), as the transmission wave T, the transmission signal amplified by the amplifier 24. When the sensor 5 includes the multiple transmission antennas 25, each of the multiple transmission antennas 25 may output (transmit), as the transmission wave T, the transmission signal amplified by a respective one of the multiple amplifiers 24. Since the transmission antennas 25 can have a configuration that is the same as and/or similar to the configuration of transmission antennas for use in the known radar technology, more detailed description is omitted.

As described above, the electronic device 1 according to the one embodiment, which includes the transmission antennas 25, can transmit transmission signals (for example, transmission chirp signals) as the transmission waves T from the respective transmission antennas 25. At least one of the functional units of the electronic device 1 may be housed in one housing. In this case, the one housing may have a hard-to-open structure. For example, the transmission antennas 25, the reception antennas 31, and the amplifiers 24 are desirably housed in one housing, and this housing desirably has a hard-to-open structure. When the sensor 5 is installed on the mobility device 100 such as an automobile, each of the transmission antennas 25 may transmit the transmission wave T to outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the transmission antennas 25 with a member such as the radar cover can reduce a risk of the transmission antennas 25 being damaged or malfunctioning because of a contact with an external object. The radar cover and the housing may also be referred to as a radome.

FIG. 2 illustrates an example of the electronic device 1 that includes two transmission antennas 25. However, in one embodiment, the electronic device 1 may include any number of transmission antennas 25. On the other hand, in one embodiment, the electronic device 1 may include the multiple transmission antennas 25 when the transmission waves T transmitted from the respective transmission antennas 25 form a beam in a predetermined direction. In one embodiment, the electronic device 1 may include multiple transmission antennas 25. In this case, the electronic device 1 may include the multiple phase control units 23 and the multiple amplifiers 24 to correspond to the multiple transmission antennas 25. Each of the multiple phase control units 23 may control the phase of a respective one of the multiple transmission waves supplied from the synthesizer 22 and to be transmitted from the respective transmission antennas 25. Each of the multiple amplifiers 24 may amplify power of a respective one of the multiple transmission signals to be transmitted from the respective transmission antennas 25. In this case, the sensor 5 may include the multiple transmission antennas. As described above, when the electronic device 1 illustrated FIG. 2 includes the multiple transmission antennas 25, the electronic device 1 may include multiple functional units necessary for transmitting the transmission waves T from the multiple transmission antennas 25.

The reception antenna 31 receives a reflected wave R. The reflected wave R may be the transmission wave T reflected off the predetermined object 200. The reception antenna 31 may include multiple antennas such as the reception antennas 31A to 31D, for example. Since the reception antennas 31 can have a configuration that is the same as and/or similar to the configuration of reception antennas for use in the known radar technology, more detailed description is omitted. The reception antenna 31 is connected to the LNA 32. A reception signal based on the reflected wave R received by the reception antenna 31 is supplied to the LNA 32.

The electronic device 1 according to the one embodiment can receive, from each of the multiple reception antennas 31, the reflected wave R that is the transmission wave T that has been transmitted as the transmission signal (transmission chirp signal) such as a chirp signal, for example, and has been reflected off the predetermined object 200. When the transmission chirp signal is transmitted as the transmission wave T in this manner, the reception signal based on the received reflected wave R is referred to as a reception chirp signal. That is, the electronic device 1 receives the reception signal (for example, the reception chirp signal) as the reflected wave R from each of the reception antennas 31. When the sensor 5 is installed on the mobility device 100 such as an automobile, each of the reception antennas 31 may receive the reflected wave R from outside the mobility device 100 through a cover member such as a radar cover, for example. In this case, the radar cover may be made of a material, for example, a synthetic resin or rubber, that allows an electromagnetic wave to pass therethrough. This radar cover may also serve as a housing of the sensor 5, for example. Covering the reception antennas 31 with a member such as the radar cover can reduce a risk of the reception antennas 31 being damaged or malfunctioning because of a contact with an external object. The radar cover and the housing may also be referred to as a radome.

When the antenna 31 is installed near the transmission antenna 25, one sensor 5 may collectively include these reception antenna 31 and transmission antenna 25, for example. That is, for example, one sensor 5 may include at least one transmission antenna 25 and at least one reception antenna 31. For example, one sensor 5 may include the multiple transmission antennas 25 and the multiple reception antennas 31. In such a case, one radar sensor may be covered with a cover member such as one radar cover, for example.

The LNA 32 amplifies, with low noise, the reception signal based on the reflected wave R received by the reception antenna 31. The LNA 32 may be a low-noise amplifier and amplifies, with low noise, the reception signal supplied from the reception antenna 31. The reception signal amplified by the LNA 32 is supplied to the mixer 33.

The mixer 33 mixes (multiplies) the reception signal having a radio frequency (RF) and supplied from the LNA 32 and the transmission signal supplied from the synthesizer 22 to generate a beat signal. The beat signal obtained by the mixer 33 through mixing is supplied to the IF unit 34.

The IF unit 34 performs frequency conversion on the beat signal supplied from the mixer 33 to decrease the frequency of the beat signal to an intermediate frequency (IF). The beat signal whose frequency has been decreased by the IF unit 34 is supplied to the AD conversion unit 35.

The AD conversion unit 35 digitizes the analog beat signal supplied from the IF unit 34. The AD conversion unit 35 may be configured as any analog-to-digital conversion circuit (Analog-to-Digital Converter (ADC)). The digitized beat signal obtained by the AD conversion unit 35 is supplied to the signal processor 40. More specifically, the digitized beat signal obtained by the AD conversion unit 35 is supplied to the distance FFT processing unit 41 (see FIG. 4) of the signal processor 40. When the multiple reception units 30 are present, the digitized beat signals obtained by the respective AD conversion units 35 may be supplied to the distance FFT processing unit 41 of the signal processor 40.

The signal processor 40 included in the electronic device 1 according to one embodiment may perform various kinds of signal processing on the signal (reception signal) output from the reception unit 30. To provide control and/or processing capabilities for executing various functions including signal processing, the signal processor 40 may include at least one processor, for example, a CPU or a DSP. The signal processor 40 may be collectively implemented by one processor, may be implemented by some processors, or may be implemented by discrete individual processors. In the one embodiment, the signal processor 40 may be configured as, for example, a CPU (hardware) and a program (software) executed by the CPU. The signal processor 40 may appropriately include a memory required for operations of the signal processor 40.

In the signal processor 40 illustrated in FIG. 4, the distance FFT processing unit 41 estimates a distance between the mobility device 100 equipped with the electronic device 1 and the object 200, based on the beat signals supplied from the respective AD conversion units 35. The distance FFT processing unit 41 may include a processing unit that performs fast Fourier transform, for example. In this case, the distance FFT processing unit 41 may be configured as any circuit, any chip, or the like that performs fast Fourier transform (FFT).

The distance FFT processing unit 41 performs FFT processing (hereinafter, appropriately referred to as "distance FFT processing") on the digitized beat signals obtained by the AD conversion units 35 of the reception unit 30. The distance FFT processing is also referred to as 1D FFT processing. For example, the distance FFT processing unit 41 may perform FFT processing on complex signals supplied from the AD conversion units 35. The digitized beat signals obtained by the AD conversion units 35 can be represented as temporal changes in signal intensity (power). The distance FFT processing unit 41 performs FFT processing on such a beat signal, so that the beat signal can be represented as a signal intensity (power) for each frequency. If a peak in a result obtained by the distance FFT processing is equal to or greater than a predetermined threshold, the distance FFT processing unit 41 may determine that the predetermined object 200 is located at the distance corresponding to the peak. For example, a method is known in which an object (reflecting object) that reflects a transmission wave is determined to be present if a peak value that is equal to or greater than a threshold is detected from the average power or amplitude of a disturbance signal as in constant false alarm rate (CFAR)-based detection processing. For example, the threshold determining unit 45 (described later) may determine whether an object is present based on such a threshold.

As described above, the electronic device 1 according to the one embodiment can detect, as the target, the object 200 that reflects the transmission wave T, based on the transmission signal transmitted as the transmission wave T and the reception signal received as the reflected wave R.

The distance FFT processing unit 41 can estimate a distance to a predetermined object, based on one chirp signal (for example, c1 illustrated in FIG. 5). That is, the electronic device 1 can measure (estimate) the distance A illustrated in FIG. 1 by performing the distance FFT processing. Since a technique for measuring (estimating) a distance to a predetermined object by performing FFT processing on a beat signal is known, more detailed description is appropriately simplified or omitted. The result (for example, distance information) of the distance FFT processing performed by the distance FFT processing unit 41 may be supplied to the velocity FFT processing unit 42. The result of the distance FFT processing performed by the distance FFT processing unit 41 may also be supplied to another functional unit such as the threshold determining unit 45, for example.

The velocity FFT processing unit 42 estimates a relative velocity between the mobility device 100 equipped with the electronic device 1 and the object 200, based on the beat signals on which the distance FFT processing has been performed by the distance FFT processing unit 41. The velocity FFT processing unit 42 may include a processing unit that performs fast Fourier transform, for example. In this case, the velocity FFT processing unit 42 may be configured as a circuit, chip, or the like of any type that performs fast Fourier transform (FFT).

The velocity FFT processing unit 42 further performs FFT processing (hereinafter, appropriately referred to as "velocity FFT processing") on the beat signals on which the distance FFT processing unit 41 has performed the distance FFT processing. The velocity FFT processing is also referred to as 2D FFT (Doppler FFT) processing. For example, the velocity FFT processing unit 42 may perform FFT processing on the complex signals supplied from the distance FFT processing unit 41. The velocity FFT processing unit 42 can estimate a relative velocity of the predetermined object, based on a subframe (for example, the subframe 1 illustrated in FIG. 5) including chirp signals. When the distance FFT processing is performed on the beat signal in the above-described manner, multiple vectors can be generated. The velocity FFT processing unit 42 can estimate the relative velocity to the predetermined object by determining a phase of a peak in a result of the velocity FFT processing performed on these multiple vectors. That is, the electronic device 1 can measure (estimate) the relative velocity between the mobility device 100 and the predetermined object 200 illustrated in FIG. 1 by performing the velocity FFT processing. Since a technique for measuring (estimating) a relative velocity of a predetermined object by performing velocity FFT processing on a result of distance FFT processing is known, more detailed description is appropriately simplified or omitted. The result (for example, velocity information) of the velocity FFT processing performed by the velocity FFT processing unit 42 may be supplied to the combining unit 43. The result (for example, velocity information) of the velocity FFT processing performed by the velocity FFT processing unit 42 may also be supplied to the threshold determining unit 45, for example. The result of the velocity FFT processing performed by the velocity FFT processing unit 42 may also be supplied to another functional unit such as the angle-of-arrival estimating unit 46, for example.

The combining unit 43 combines, a predetermined number of times, information based on the result of the velocity FFT processing performed by the velocity FFT processing unit 42. The predetermined number of times the information based on the result of the velocity FFT processing is combined by the combining unit 43 may be read from the number-of-combinations storage unit 44. Combining processing performed by the combining unit 43 is further described later.

The number-of-combinations storage unit 44 may be a memory that stores the number of times the combining unit 43 performs the combining processing (the number of combinations). The number-of-combinations storage unit 44 can be, for example, a semiconductor memory or a magnetic disk. However, the number-of-combinations storage unit 44 is not limited to these, and can be any storage device. The number-of-combinations storage unit 44 may be, for example, a storage medium such as a memory card inserted to the electronic device 1 according to the present embodiment. The number-of-combinations storage unit 44 may also be an internal memory of the CPU used as the controller 10 and/or the signal processor 40 as described above.

In one embodiment, the controller 10 may notify the number-of-combinations storage unit 44 of the number of combinations to be stored therein. More specifically, for example, the mode selecting unit 11 of the controller 10 may notify the number-of-combinations storage unit 44 of the number of combinations to be stored therein. That is, the mode selecting unit 11 of the controller 10 may notify the number-of-combinations storage unit 44 of the signal processor 40 of the number of combinations corresponding to the selected mode. Thus, the number-of-combinations storage unit 44 can store the notified number of combinations.

The threshold determining unit 45 performs determination processing for a distance and/or a relative velocity, based on the result of the distance FFT processing performed by the distance FFT processing unit 41 and/or the result of the velocity FFT processing performed by the velocity FFT processing unit 42. In one embodiment, the threshold determining unit 45 may perform the determination processing for the distance and/or the relative velocity, based on a combined result of the velocity FFT processing obtained by the combining unit 43. In one embodiment, the threshold determining unit 45 may perform the determination based on a predetermined threshold. For example, the threshold determining unit 45 may determine whether the result of the distance FFT processing performed by the distance FFT processing unit 41 and/or the result of the velocity FFT processing performed by the velocity FFT processing unit 42 exceeds a predetermined threshold. For example, the threshold determining unit 45 may determine whether the combined result, of the velocity FFT processing performed by the velocity FFT processing unit 42, obtained by the combining unit 43 exceeds a predetermined threshold. The threshold determining unit 45 may determine that an object is detected at the distance and/or the relative velocity where the result or the combined result exceeds the predetermined threshold.

The threshold determining unit 45 may output only a result that exceeds the predetermined threshold among the results of the distance FFT processing performed by the distance FFT processing unit 41 and/or the results of the velocity FFT processing performed by the velocity FFT processing unit 42. In one embodiment, the threshold determining unit 45 may output only a result that exceeds the predetermined threshold among the combined results of the velocity FFT processing obtained by the combining unit 43. The operation performed by the threshold determining unit 45 may be the same as and/or similar to, for example, detection processing based on a constant false alarm rate (CFAR). In one embodiment, the operation performed by the threshold determining unit 45 may be processing based on Order Statistic CFAR (OS-CFAR). OS-CFER is a method for setting a threshold based on ordered statistics and determining that a target is present when the signal intensity exceeds the threshold. The result of the threshold-based determination processing performed by the threshold determining unit 45 may be supplied to the angle-of-arrival estimating unit 46. The result of the processing performed by the threshold determining unit 45 may also be supplied to another functional unit such as the object detecting unit 47 and/or the output determining unit 48, for example.

When the electronic device 1 operates in multiple operation modes (radar modes), the threshold determining unit 45 may determine whether an object is present based on the threshold of the CFAR (for example, OS-CFER) stored for each radar mode.

The angle-of-arrival estimating unit 46 may estimate the direction from which the reflected wave R arrives from the predetermined object 200, based on the result of the velocity FFT processing performed by the velocity FFT processing unit 42 and/or the output from the threshold determining unit 45. The angle-of-arrival estimating unit 46 may estimate the direction from which the reflected wave R arrives from the predetermined object 200, based on the result output from the threshold determining unit 45 among the results of the velocity FFT processing performed by the velocity FFT processing unit 42. The electronic device 1 can estimate the direction from which the reflected wave R arrives, by receiving the reflected wave R from the multiple reception antennas 31. For example, the multiple reception antennas 31 are arranged at a predetermined interval. In this case, the transmission wave T transmitted from the transmission antenna 25 is reflected off the predetermined object 200 to become the reflected wave R. Each of the multiple reception antennas 31 arranged at the predetermined interval receives the reflected wave R. The angle-of-arrival estimating unit 46 can estimate the direction from which the reflected wave R arrives at each of the multiple reception antennas 31, based on the phases of the respective reflected waves R received by the multiple reception antennas 31 and a difference between paths of the respective reflected waves R. That is, the electronic device 1 can measure (estimate) the angle of arrival θ illustrated in FIG. 1, based on the result of the velocity FFT processing.

In the electronic device 1 according to the one embodiment, the angle-of-arrival estimating unit 46 may estimate the direction from which the reflected wave arrives, based on complex signals received by the multiple reception antennas 31 at the velocity at which the object is determined to be present. As described above, the electronic device 1 according to the one embodiment can estimate an angle of the direction in which the object is present.

Various techniques for estimating a direction from which the reflected wave R arrives, based on a result of velocity FFT processing have been proposed. For example, known direction-of-arrival estimation algorithms include MUSIC (MUltiple Signal Classification) and ESPRIT (Estimation of Signal Parameters via Rotational Invariance Technique). Thus, more detailed description of the known techniques is appropriately simplified or omitted. Information (angle information) of the angle of arrival θ estimated by the angle-of-arrival estimating unit 46 may be supplied to the object detecting unit 47.

In the electronic device 1 according to the one embodiment, the object detecting unit 47 determines whether an object is detected as the target (for example, by clustering), based on information on the direction (angle) from which the reflected wave arrives, information on the relative velocity to the target, and/or information on the distance to the target. The information on the direction (angle) from which the reflected wave arrives may be acquired from the angle-of-arrival estimating unit 46. The information on the relative velocity and the distance to the target may be acquired from the threshold determining unit 45. The information on the relative velocity to the target may be acquired from the velocity FFT processing unit 42. The information on the distance to the target may be acquired from the distance FFT processing unit 41. The object detecting unit 47 may calculate average power at points constituting the object detected as the target.

The object detecting unit 47 detects an object located in a range to which the transmission wave T is transmitted, based on the information supplied from at least any of the distance FFT processing unit 41, the velocity FFT processing unit 42, the threshold determining unit 45, or the angle-of-arrival estimating unit 46. The object detecting unit 47 may perform detection of an object by performing, for example, clustering processing based on the supplied distance information, velocity information, and angle information. For example, known algorithms used in clustering of data include DBSCAN (Density-based spatial clustering of applications with noise) and the like. In the clustering processing, for example, average power of points constituting the detected object may be calculated. The distance information, the velocity information, the angle information, and/or the electric power information of the object detected by the object detecting unit 47 may be supplied to the output determining unit 48. The output from the object detecting unit 47 may be supplied to another functional unit such as the ECU 50, for example. In this case, when the mobility device 100 is an automobile, communication may be performed using a communication interface such as a CAN (Controller Area Network), for example.

The output determining unit 48 may perform processing of predicting a target location, in the next frame, of the object subjected to the clustering processing, for example. The output determining unit 48 may predict the location of the object, in the next frame, subjected to the clustering processing, by using a Kalman filter, for example. The output determining unit 48 may store the predicted location of the object in the next frame in any storage unit, for example.

In one embodiment, the output determining unit 48 may store, in any storage unit or the like, in which operation mode the object is detected, based on a point cloud related to the detected object. For example, the output determining unit 48 may store, in a memory or the like, which of a first radar mode or a second radar mode the detected object is detected. In this case, the output determining unit 48 may determine a priority order of the first radar mode and the second radar mode in accordance with whether the relative velocity estimated in the previous frame is constant. An example is described below in which a velocity resolution in the first radar mode is higher (finer) than a velocity resolution in the second radar mode. For example, when an object is detected in both the first radar mode and the second radar mode, the output determining unit 48 may prioritize the first radar mode because the first radar mode 1 has a finer velocity resolution. On the other hand, when an object is detected in only one of the first radar mode and the second radar mode, the output determining unit 48 may select the radar mode in which the object is detected.

The output determining unit 48 may use, as the point cloud related to the detected object, data associating frames with each other, based on the principle of object tracking, for example. In the object tracking, the frames may be associated with each other based on a correlation between information (such as the distance, the angle, the velocity, the electric power, the dispersion amount of the point cloud, and the identification information, for example) of the object predicted in the previous frame stored in the memory and information of the object observed in the current frame.

The output determining unit 48

The output determining unit 48 may perform prediction in the next frame using, for example, a Kalman filter from the information of the object observed in the current frame associated as described above.
In this case, the output determining unit 48 may store the information of the object obtained by the prediction in any memory or the like. The output determining unit 48 may then output the information of the object predicted in the current frame, which is calculated in the previous frame, among the piece of information stored in the memory.
For example, the ECU 50 (see FIG. 2) included in the electronic device 1 according to the one embodiment is capable of controlling the functional units of the mobility device 100 and controlling operations of the entire mobility device 100. To provide control and processing capabilities for executing various functions, the ECU 50 may include at least one processor, for example, a CPU (Central Processing Unit) or a DSP (Digital Signal Processor). The ECU 50 may be collectively implemented by one processor, may be implemented by some processors, or may be implemented by discrete individual processors. The processor may be implemented as one integrated circuit. The integrated circuit is also referred to as an IC. The processor may be implemented as multiple integrated circuits and discrete circuits connected to be able to perform communication. The processor may be implemented based on various other known technologies. In one embodiment, the ECU 50 may be configured as, for example, a CPU and a program executed by the CPU. The ECU 50 may appropriately include a memory necessary for operations of the ECU 50. At least part of the functions of the controller 10 may be functions of the ECU 50, or at least part of the functions of the ECU 50 may be functions of the controller 10.
The electronic device 1 illustrated in FIG. 2 includes the two transmission antennas 25 and the four reception antennas 31. However, the electronic device 1 according to the one embodiment may include any number of transmission antennas 25 and any number of reception antennas 31. For example, since the electronic device 1 includes the two transmission antennas 25 and the four reception antennas 31, the electronic device 1 can be considered to include a virtual antenna array virtually including eight antennas. As described above, the electronic device 1 may receive the reflected wave R of 16 subframes illustrated in FIG. 5 by using, for example, the eight virtual antennas.
An operation of the electronic device 1 according to the one embodiment is described.
As described above, the electronic device 1 according to the one embodiment transmits a transmission wave from the transmission antenna and receives, from the reception antenna, a reflected wave that is the transmission wave reflected off an object. The electronic device 1 according to the one embodiment may detect the object that reflects the transmission wave, based on a transmission signal and/or a reception signal. The electronic device 1 according to the one embodiment determines whether the object thus detected is a predetermined target. An algorithm of the processing performed by the electronic device 1 according to the one embodiment is further described below.
In the electronic device 1 according to the one embodiment, the mode selecting unit 11 of the controller 10 selects an operation mode of the electronic device 1 and notifies the parameter setting unit 12 and the signal processor 40 of the selected operation mode. The parameter setting unit 12 sets a parameter of the operation mode selected by the mode selecting unit 11, and notifies the transmission unit 20 of the set parameter. Here, any memory or the like in the parameter setting unit 12 may store multiple radar parameters. The controller 10 can switch between the multiple radar modes, for example, within one frame of the transmission wave in accordance with the radar parameters set by the parameter setting unit 12.
As an example, description is given below of the electronic device 1 capable of operating while switching between a first operation mode in which the velocity resolution of the radar is relatively high (fine) and a second operation mode in which the velocity resolution of the radar is relatively low (coarse). The mode selecting unit 11 of the controller 10 may determine which of the first operation mode or the second operation mode the operation mode of the electronic device 1 is, and notify the parameter setting unit 12 and the signal processor 40 of the result. Thus, the signal processor 40 can grasp the operation mode in which the reception signal is processed. The parameter setting unit 12 can set various parameters for transmitting a transmission signal and notify the transmission unit 20 of the parameters. The parameter setting unit 12 may set radar parameters corresponding to each of the first operation mode and the second operation mode. Such radar parameters may be stored in any storage unit in advance, or may be acquired.
In one embodiment, the parameter setting unit 12 may set, for example, the following radar parameters in the first operation mode and the second operation mode.

[Table 1]

|  | First operation mode | Second operation mode |
|---|---|---|
| Resolution of distance [m] | 0.2 | 0.2 |

(continued)

|  | First operation mode | Second operation mode |
| --- | --- | --- |
| Resolution of relative velocity [km/h] | 1 | 4 |
| Number of subframes | 1 | 4 |
| Number of chirp signals | 256 | 64 |
| Chirp signal interval [ms] | 0.05 | 0.05 |
| Subframe interval [ms] | 12.8 | 3.2 |
| Maximum number of to-be-combined subframes | 0 | 3 |

In Table 1 above, the resolution of the distance may be the resolution achieved during distance Fourier transform (1D FFT). The resolution of the relative velocity may be the resolution achieved by velocity Fourier transform (2D FFT). The number of chirp signals may be the number of chirp signals transmitted in one subframe. The chirp interval may be a time interval at which the transmission wave is transmitted as one chirp signal. The subframe interval may be a product of the numbers of chirps and the chirp interval. The maximum number of to-be-combined subframes may be determined based on the number of subframes in one frame.

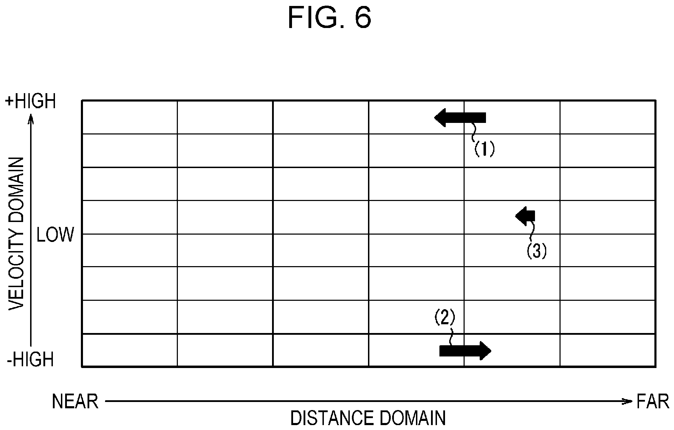

FIG. 6 is a diagram illustrating domains of the result of velocity Fourier transform (2D FFT) performed on the reception signal in the electronic device 1. As illustrated in FIG. 6, the result of the processing performed on the reception signal by the velocity FFT processing unit 42 of the signal processor 40 is represented by a distance domain and a velocity domain. As an example, in the result illustrated in FIG. 6, the horizontal direction represents the distance domain. In FIG. 6, a rightward direction indicates a direction in which the distance from the electronic device 1 increases. In FIG. 6, a leftward direction indicates a direction in which the distance to the electronic device 1 decreases. In FIG. 6, an upward direction indicates a direction (positive direction) in which the relative velocity relative to the electronic device 1 increases. In FIG. 6, a downward direction indicates a direction (negative direction) in which the relative velocity relative to the electronic device 1 increases. In FIG. 6, a central portion in an up-down direction indicates a portion where the relative velocity relative to the electronic device 1 is small.

For example, when the relative velocity of a detected object is large as indicated by arrows (1) and (2) illustrated in FIG. 6, the object presumably moves to an adjacent cell (bin) as illustrated in FIG. 6 in the result of the processing performed by the velocity FFT processing unit 42. In such a case, the reception signal is detected in two cells. If the reception signal is combined to be averaged, the effect of averaging a signal-to-noise ratio (SNR) is not improved. In this case, combining the reception signal results in a reduced effect of averaging. On the other hand, when the relative velocity of the detected object is small as indicated by an arrow (3) illustrated in FIG. 6, the object presumably does not move to an adjacent cell as illustrated in FIG. 6 in the result of the processing by the velocity FFT processing unit 42. In such a case, if the reception signal is combined to be averaged, noise is suppressed by the effect of averaging the SNR and the SNR is expectedly improved. That is, in such a case, the object detection accuracy can be expectedly improved by combining the signal.

The combining unit 43 of the signal processor 40 may then combine the distance and the relative velocity between the electronic device 1 and the detected object in the two-dimensional data as illustrated in FIG. 6 in accordance with the number of combinations set as the number of times the reception signal is combined. In this case, the combining unit 43 may calculate the number of combinations described above in accordance with numerical values tabulated in advance, for example. For example, in the first operation mode, the velocity FFT processing unit 42 may perform 2D FFT on 256 chirp signals. Therefore, the velocity resolution of 2D FFT in this case is an accuracy of 1 km/h, for example.

Here, the setting of the number of combinations by the combining unit 43 is further described. In the present disclosure, the combining unit 43 may set the number of combinations N, the number of combinations, for example, by a combination expression represented by Expression (1) below.

$$\text{[Frame interval or subframe interval of transmission wave]} \times \text{[m} \times \text{Distance resolution]}/(\text{[Velocity resolution]} \times \text{[Corresponding velocity bin]}) \tag{1}$$

In Expression (1) above, m may be a number equal to or less than 0.5. If m is equal to or less than a half the frame interval or subframe interval of the transmission wave, movement to another bin can be restricted. When calculating the number of combinations, the combining unit 43 may use an expression other than Expression (1) above.

The number of combinations in the present disclosure may be an integer. When the result of the calculation is not an integer, the combining unit 43 may round down or round up the fractional part. The velocity resolution x the corresponding velocity bin may be referred to as a defined velocity. In Expression (1) above, the denominator is set to [Velocity resolution] x [Corresponding velocity bin]. Here, the corresponding velocity bin is a positive integer 1, ..., M, where M is (Maximum measured velocity/velocity resolution).

In Expression (1) above, the denominator may be [Velocity resolution] x [Velocity index (1, ..., M)]. That is, in the present disclosure, the combining unit 43 may set the number of combinations N, the number of combinations, for example, by a combination expression represented by Expression (2) below.

[Frame interval or subframe interval of transmission wave] × [m × [Distance resolution] / ([Velocity resolution] × [Velocity index]) (2)

In Equation (2) above, the velocity index is a positive integer, and M is (maximum measured velocity/velocity resolution).

The velocity FFT processing performed by the velocity FFT processing unit 42 may be performed in accordance with an expression such as Expression (3) below, for example.

[Math. 1]

$$F(t) = \sum_{x=0}^{N-1} f(x) \exp\left(-i\frac{2\pi t x}{N}\right) \quad (3)$$

In the case of FFT processing in the velocity domain, N represents the number of chirp signals in exp in Expression (3) above. In Expression (3) above, one round of 360° is achieved with x = 0 to N-1. Thus, the largest gain is obtained when the velocity of the detected object is constant. For example, in the case of operation in the second operation mode, 64 chirp signals may be transmitted four times. This allows the reception signal to be combined. For example, when the combining unit 43 combines the reception signal (that is, equivalent to four subframes) three times, noise is suppressed and the SNR thus can be improved.

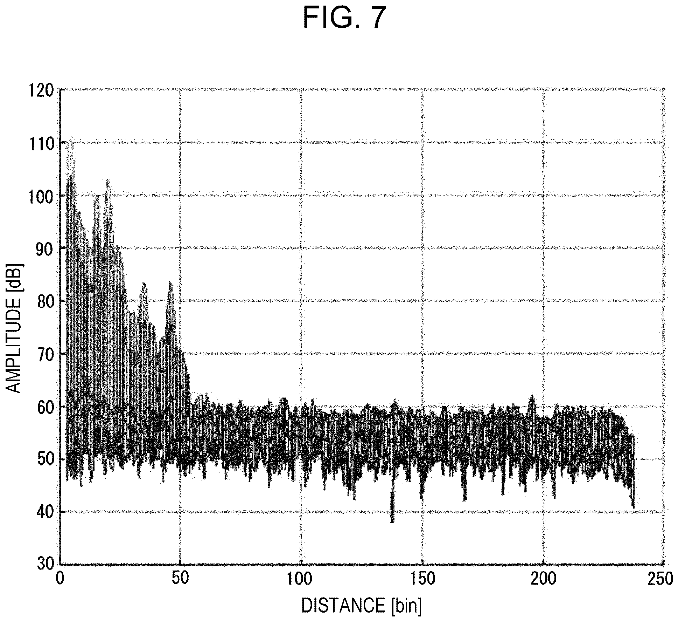

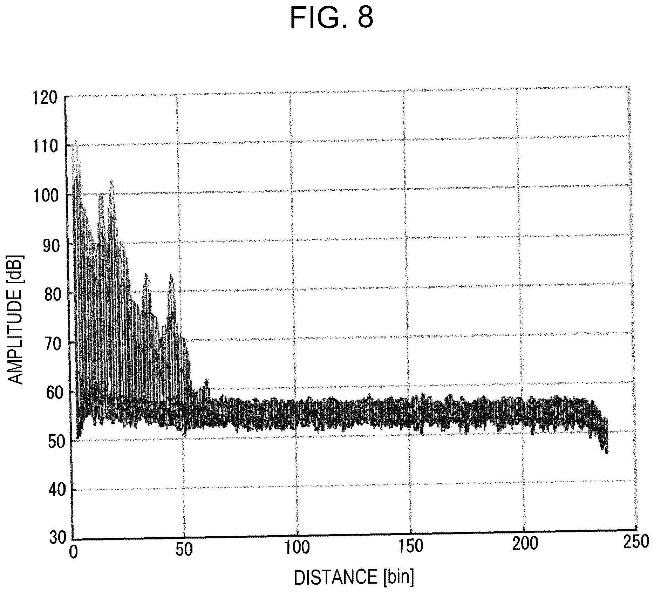

FIG. 7 is a diagram illustrating a 2D FFT detection result before the reception signal combining processing is performed by the combining unit 43, that is, before the effect of averaging appears. FIG. 8 is a diagram illustrating a 2D FFT detection result after the reception signal combining processing is performed by the combining unit 43, that is, after the effect of averaging appears. As illustrated in FIG. 8, it can be confirmed that the component of a noise floor is reduced compared to the result of FIG. 7. That is, as illustrated in FIG. 8, the electronic device 1 according to the one embodiment can improve the SNR.

In the embodiment described above, the resolution of the distance is the same in the first operation mode and the second operation mode. However, the resolution of the distance may be different between the first operation mode and the second operation mode. In the embodiment described above, the electronic device 1 operates by switching between the two operation modes, i.e., the first operation mode and the second operation mode. However, in one embodiment, the electronic device 1 may operate in three or more operation modes, for example.

The electronic device 1 according to one embodiment may operate in multiple radar modes in which the resolution of the distance is the same or substantially the same but the resolution of the relative velocity is different, for example. The electronic device 1 according to one embodiment may switch the radar mode within one frame of the transmission wave. The multiple radar modes may be, for example, a first operation mode in which the resolution of the relative velocity is high and a second operation mode in which the reception signal is combined in accordance with the resolution of the relative velocity and/or the resolution of the distance. In the second operation mode, an operation mode may be used in which averaging is performed so that the detected object does not cross a distance range of the result of the velocity FFT processing. As described above, the electronic device 1 according to the one embodiment can estimate the CFAR and/or the direction of arrival by using the signal with the improved SNR.

As described above, in the electronic device 1 according to the one embodiment, the signal processor 40 may calculate a distance and a relative velocity between the electronic device and an object that reflects a transmission wave, based on a transmission signal transmitted as the transmission wave and a reception signal received as a reflected wave. The signal processor 40 may combine the distance and the relative velocity between the electronic device and the object that reflects the transmission wave in accordance with the number of combinations set as the number of times the reception signal is combined. That is, the electronic device 1 according to the one embodiment can suppress noise before the object moves to an adjacent cell in a result of processing performed by the velocity FFT processing unit 42.

In the electronic device 1 according to the one embodiment, the controller 10 may set the number of combinations for the distance and the relative velocity between the electronic device and the object that reflects the transmission wave, based on a predetermined condition. Here, the predetermined condition may be, for example, at least any of a resolution of the distance between the electronic device and the object that reflects the transmission wave, a resolution of the relative velocity between the electronic device and the object that reflects the transmission wave, or a frame interval or subframe interval of the transmission wave.

In the electronic device 1 according to the one embodiment, the controller 10 may perform control to make the electronic device 1 operate in a first operation mode and a second operation mode that are different in a transmission mode of the transmission wave. Here, the first operation mode may be a mode in which the electronic device 1 operates with the resolution of the relative velocity, between the electronic device and the object that reflects the transmission wave, that is equal to or greater than a predetermined value. The second operation mode may be a mode in which the electronic device 1 operates with the resolution of the relative velocity, between the electronic device and the object that reflects the transmission wave, that is equal to or less than the predetermined value.

In the electronic device 1 according to the one embodiment, the controller 10 may perform control to make the electronic device 1 operate in the first operation mode when the object is detected in both the first operation mode and the second operation mode and when the relative velocity between the electronic device and the object is equal to or higher than a predetermined value. That is, in the electronic device 1 according to the one embodiment, the controller 10 may perform control to make the electronic device 1 operate in the first operation mode when the number of combinations of the reception signal is the same in the first operation mode and the second operation mode.

In the electronic device 1 according to the one embodiment, the controller 10 may perform control to make the electronic device 1 operate in the second operation mode when the relative velocity between the electronic device and the detected object is equal to or less than the predetermined value. That is, in the electronic device 1 according to the one embodiment, the controller 10 may perform control to make the electronic device 1 operate in the second operation mode when the number of combinations of the reception signal is greater in the second operation mode.

In the electronic device 1 according to the one embodiment, when the object is detected in a mode that is either the first operation mode or the second operation mode, the controller 10 may perform control to make the electronic device 1 operate in the mode in which the object is detected.

In the electronic device 1 according to the one embodiment, the signal processor 40 may calculate a movement distance of the object, based on the relative velocity between the electronic device and the detected object and a time interval between frames of the transmission wave. The signal processor 40 may also determine whether to combine the distance and the relative velocity between the electronic device and the detected object in accordance with whether, within the movement distance of the object, there is a movement to an adjacent cell in a distance domain of a result of velocity Fourier transform processing.

In the electronic device 1 according to the one embodiment, the signal processor 40 may combine the distance and the relative velocity between the electronic device and the detected object in accordance with the set number of combinations prior to threshold-based determination processing using a constant false alarm rate.

In the electronic device 1 according to the one embodiment, the controller 10 may switch between the first operation mode and the second operation mode within one frame of the transmission wave. The first operation mode and the second operation mode may be modes in which the resolution of the relative velocity is different depending on the number of chirp signals included in a frame of the transmission wave.

In object detection using the radar technology, for example, a process is expected in which the location of the object is accurately measured by performing frame combining processing when the relative velocity between the electronic device and the object is small, and the distance to the object is accurately measured by performing angle combining processing when the relative velocity is large. However, a determination criterion relative to which the relative velocity between the electronic device and the object is low or high is obtained only after detection of the object. Therefore, since the SNR is low in a state in which the reception signal cannot be combined, a risk of missed detection or a risk of failing to determine the combination and failing to perform accurate measurement is also expected.

For example, a process is also expected in which when the relative velocity of the object that reflects the transmission wave increases, the distance to the reflecting object is measured by reacting to the change. However, when the relative velocity between the electronic device and the object is low, the SNR achieved by combination of frames is high and thus the object can be detected. On the other hand, when the previous determination changes due to a change in the relative velocity, missed detection may occur due to a change in the SNR.

When detecting an object, the electronic device 1 according to the one embodiment may increase the resolution of the relative velocity for an object having a constant relative velocity relative to the electronic device 1. In addition, when detecting an object, the electronic device 1 according to the one embodiment may increase the resolution of the relative velocity for an object whose relative velocity relative to the electronic device 1 is equal to or less than a predetermined magnitude. This can improve the signal level, and thus can improve the SNR and the object detection rate. Further, the electronic device 1 according to the one embodiment may decrease the resolution of the relative velocity (make the resolution coarse) for a detection object whose relative velocity relative to the electronic device 1 is high, that is, is greater than the predetermined magnitude. In this manner, the electronic device 1 according to the one embodiment can combine the reception signal in a range not exceeding a region of the resolution of the distance and the resolution of the relative velocity. Therefore, the electronic device 1 according to the one embodiment can suppress a noise level and improve the object detection rate. The electronic device 1 according to the one embodiment can also increase the robustness of the detection processing by operating while switching between the multiple operation modes within one frame as described above.

While the present disclosure has been described based on the various drawings and the embodiments, it is to be noted that a person skilled in the art can easily make various variations or corrections based on the present disclosure. Therefore, it is to be noted that these variations or corrections are within the scope of the present disclosure. For example, functions and the like included in each functional unit can be rearranged without causing any logical contradiction. Multiple functional units or the like may be combined into one or may be divided. The embodiments according to the present disclosure described above are not limited to strict implementation according to the respective embodiments described above, and may be implemented by appropriately combining the features or omitting part thereof. That is, a person skilled in the art can make various variations and corrections to the contents of the present disclosure based on the present disclosure. Therefore, these variations and corrections are within the scope of the present disclosure. For example, in each embodiment, each functional unit, each means, each step, or the like can be added to another embodiment or replaced with each functional unit, each means, each step, or the like in another embodiment without causing any logical contradiction. In each embodiment, multiple functional units, means, steps, or the like may be combined into one or may be divided. The embodiments of the present disclosure described above are not limited to strict implementation according to the respective embodiments described above, and may be implemented by appropriately combining the features or omitting part thereof.

For example, in the embodiments described above, the description has been given of the configuration in which the object detection ranges are dynamically switched between by using the one sensor 5. However, in one embodiment, detection of an object may be performed in the determined object detection ranges by using the multiple sensors 5. In one embodiment, beamforming may be performed toward the determined object detection ranges by using the multiple sensors 5.

The embodiments described above are not limited only to implementation as the electronic device 1. For example, the embodiments described above may be implemented as a method for controlling a device such as the electronic device 1. For example, the embodiments described above may be implemented as a program executed by a device such as the electronic device 1, a computer, or the like.

The electronic device 1 according to one embodiment may include, as the minimum configuration, at least part of at least one of the sensor 5 or the controller 10, for example. On the other hand, the electronic device 1 according to one embodiment may appropriately include at least any of the signal generating unit 21, the synthesizer 22, the phase control units 23, the amplifiers 24, or the transmission antennas 25 illustrated in FIG. 2 in addition to the controller 10. The electronic device 1 according to the one embodiment may appropriately include at least any of the reception antenna 31, the LNA 32, the mixer 33, the IF unit 34, or the AD conversion unit 35 instead of or along with the functional units described above. The electronic device 1 according to the one embodiment may include any storage unit (memory). As described above, the electronic device 1 according to the one embodiment can employ various configurations. When the electronic device 1 according to the one embodiment is mounted in the mobility device 100, for example, at least any of the functional units described above may be installed at an appropriate place such as the inside of the mobility device 100. On the other hand, in one embodiment, for example, at least any of the transmission antennas 25 or the reception antennas 31 may be installed outside the mobility device 100.

REFERENCE SIGNS

| | |
|---|---|
| 1 | electronic device |
| 5 | sensor |
| 10 | controller |
| 11 | mode selecting unit |
| 12 | parameter setting unit |
| 20 | transmission unit |
| 21 | signal generating unit |
| 22 | synthesizer |
| 23 | phase control unit |
| 24 | amplifier |
| 25 | transmission antenna |
| 30 | reception unit |
| 31 | reception antenna |

32    LNA
33    mixer
34    IF unit
35    AD conversion unit
40    signal processor
41    distance FFT processing unit
42    velocity FFT processing unit
43    combining unit
44    number-of-combinations storage unit
45    threshold determining unit
46    angle-of-arrival estimating unit
47    object detecting unit
48    output determining unit
50    ECU
100   mobility device
200   object

**Claims**

1. An electronic device comprising:

a transmission antenna configured to transmit a transmission wave;
a reception antenna configured to receive a reflected wave that is the transmission wave having been reflected; and
a signal processor configured to calculate a distance and a relative velocity between the electronic device and an object that reflects the transmission wave, based on a transmission signal transmitted as the transmission wave and a reception signal received as the reflected wave, wherein
the signal processor is configured to combine the distance and the relative velocity in accordance with a number of combinations set as a number of times the reception signal is combined.

2. The electronic device according to claim 1, further comprising: a controller configured to set the number of combinations, based on at least any of a resolution of the distance, a resolution of the relative velocity, or a frame interval or subframe interval of the transmission wave.

3. The electronic device according to claim 1 or 2, wherein

the controller is configured to perform control to make the electronic device operate in a first operation mode and a second operation mode that are different in a transmission mode of the transmission wave,
the first operation mode is a mode in which the electronic device operates with a resolution of the relative velocity that is equal to or greater than a predetermined value, and
the second operation mode is a mode in which the electronic device operates with the resolution of the relative velocity that is equal to or less than the predetermined value.

4. The electronic device according to claim 3, wherein the controller is configured to perform control to make the electronic device operate in the first operation mode when the object is detected in both the first operation mode and the second operation mode and the relative velocity between the electronic device and the object is equal to or greater than a predetermined velocity.

5. The electronic device according to claim 3 or 4, wherein the controller is configured to perform control to make the electronic device operate in the second operation mode when the relative velocity between the electronic device and the object is equal to or less than a predetermined velocity.

6. The electronic device according to any of claims 3 to 5, wherein when the object is detected in a mode that is either the first operation mode or the second operation mode, the controller is configured to perform control to make the electronic device to operate in the mode in which the object is detected.

7. The electronic device according to claim 1, wherein the signal processor is configured to calculate a movement distance of the object, based on the relative velocity between the electronic device and the object and a time interval between frames of the transmission wave; and determine whether to combine the distance and the relative velocity in accordance with whether, within the movement distance, there is a movement to an adjacent cell in a distance domain of a result of velocity Fourier transform processing.

8. The electronic device according to any of claims 1 to 7, wherein the signal processor is configured to combine the distance and the relative velocity in accordance with the number of combinations prior to threshold-based determination processing using a constant false alarm rate.

9. The electronic device according to any of claims 3 to 8, wherein the controller is configured to switch between the first operation mode and the second operation mode within one frame of the transmission wave.

10. The electronic device according to any of claims 3 to 9, wherein the first operation mode and the second operation mode are modes in which the resolution of the relative velocity is different depending on a number of chirp signals included in a frame of the transmission wave.

11. A method for controlling an electronic device, comprising:

transmitting a transmission wave;
receiving a reflected wave that is the transmission wave having been reflected;
calculating a distance and a relative velocity between the electronic device and an object that reflects the transmission wave, based on a transmission signal transmitted as the transmission wave and a reception signal received as the reflected wave; and
combining the distance and the relative velocity in accordance with a number of combinations set as a number of times the reception signal is combined.

12. A program for causing an electronic device to execute:

transmitting a transmission wave;
receiving a reflected wave that is the transmission wave having been reflected;
calculating a distance and a relative velocity between the electronic device and an object that reflects the transmission wave, based on a transmission signal transmitted as the transmission wave and a reception signal received as the reflected wave; and
combining the distance and the relative velocity in accordance with a number of combinations set as a number of times the reception signal is combined.

# FIG. 1

# FIG. 2

# FIG. 3

# FIG. 4

FROM CONTROLLER

FROM RECEPTION UNIT

40

41 — DISTANCE FFT PROCESSING UNIT

42 — VELOCITY FFT PROCESSING UNIT

44 — NUMBER-OF-COMBINATION STORAGE UNIT

43 — COMBINING UNIT

45 — THRESHOLD DETERMINING UNIT

46 — ANGLE-OF-ARRIVAL ESTIMATING UNIT

47 — OBJECT DETECTING UNIT

48 — OUTPUT DETERMINING UNIT

DETECTION RESULT (TO ECU, ETC.)

FIG. 5

SUBFRAME 1 SUBFRAME 2 ⋯ SUBFRAME 16 FRAME INTERVAL SUBFRAME 1

c1 c2 ⋯ c8 c1 c2 ⋯ c8 c1 c2 ⋯ c8 c1 c2 ⋯ c8

FRAME 1 FRAME 2

f

t

# FIG. 6

# FIG. 7

# FIG. 8

## INTERNATIONAL SEARCH REPORT

| International application No. |
|---|
| **PCT/JP2022/027172** |

| A. | CLASSIFICATION OF SUBJECT MATTER |
|---|---|

*G01S 13/34*(2006.01)i; *G01S 13/58*(2006.01)i; *G01S 13/60*(2006.01)i
FI:   G01S13/58 210; G01S13/34; G01S13/60 202

According to International Patent Classification (IPC) or to both national classification and IPC

| B. | FIELDS SEARCHED |
|---|---|

Minimum documentation searched (classification system followed by classification symbols)

G01S7/00-7/42; G01S13/00-13/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2012-163350 A (TOSHIBA CORP) 30 August 2012 (2012-08-30)<br>    paragraphs [0036], [0038], [0050], fig. 7 | 1-2, 7-12 |
| Y | | 3-6 |
| Y | JP 2019-023595 A (HITACHI AUTOMOTIVE SYSTEMS LTD) 14 February 2019<br>(2019-02-14)<br>    paragraphs [0026], [0027] | 3-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/027172**

| Patent document cited in search report | | | Publication date (day/month/year) | Patent family member(s) | Publication date (day/month/year) |
|---|---|---|---|---|---|
| JP | 2012-163350 | A | 30 August 2012 | US 2012/0200451 A1 paragraphs [0043], [0045], [0057], fig. 7 | |
| JP | 2019-023595 | A | 14 February 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021119969 A
- JP 2004177350 A
- JP 2007248146 A